# EUROPÄISCHE PATENTSCHRIFT

(11) **EP 4 275 465 B1**
(45) Veröffentlichungstag und Bekanntmachung des Hinweises auf die Patenterteilung: **28.05.2025**
(21) Anmeldenummer: 23167595.0
(22) Anmeldetag: 12.04.2023
(51) Int. Cl.: A01B 59/041, A01B 59/043, A01B 59/06

(54) **HYDRAULISCHE VERSTELLVORRICHTUNG**
HYDRAULIC ADJUSTING DEVICE
DISPOSITIF DE RÉGLAGE HYDRAULIQUE

(30) Priorität: 09.05.2022 DE 102022111489
(43) Veröffentlichungstag der Anmeldung: 15.11.2023
(73) Patentinhaber: Weber-Hydraulik GmbH, 78479 Reichenau (DE)
(72) Erfinder: WÖRNER, Nathalie, 78467 Konstanz (DE); WEIß, Hans-Wilhelm, 79879 Wutach-Lembach (DE)
(74) Vertreter: LBP Lemcke, Brommer & Partner Patentanwälte mbB

(56) Entgegenhaltungen:
- EP-A1- 1 175 817
- EP-A1- 3 479 668
- WO-A1-2021/004888
- AT-B- 272 721
- DE-A1- 19 737 318

## Beschreibung

Die vorliegende Erfindung betrifft eine hydraulische Verstellvorrichtung, insbesondere zur Querverstellung der Unterlenker eines Dreipunktkrafthebers an einer landwirtschaftlichen Arbeitsmaschine mit zwei wahlweise ansteuerbaren Hydraulikzylindern und einer hydraulischen Steuerschaltung zur Ansteuerung der Hydraulikzylinder.

Bei landwirtschaftlichen Arbeitsmaschinen, wie Traktoren, Schleppern oder dergleichen werden front- oder heckseitig Arbeitsgeräte wie Mähwerke, Pflug, Erntemaschinen und ähnliches über eine sogenannte Dreipunktaufhängung angebaut. Eine Dreipunktaufhängung ist beispielsweise in der EP 1 116 430 A1 beschrieben. Zusammen mit einer Hydraulik zum Anheben und Absenken des Arbeitsgeräts wird eine solche Dreipunktaufhängung auch als Dreipunktkraftheber bezeichnet.

Eine Dreipunktaufhängung besitzt in der Regel zwei Unterlenker, die an entsprechenden Anlenkpunkten an der Arbeitsmaschine schwenkbar angelenkt sind, sowie einen ebenfalls schwenkbaren Oberlenker. Die Unterlenker müssen hierbei querverstellt werden können, um den Abstand zwischen den Unterlenkern an die Breite des Anbaugerätes anpassen zu können. Für eine solche Breitenverstellung sind Lösungen mit Ketten oder Knebelschrauben realisiert. Vorteilhaft ist jedoch eine hydraulische Querverstellung der Unterlenker. Hierbei werden die beiden Unterlenker jeweils mit einem in seitlicher Richtung schräg verlaufenden Hydraulikzylinder verbunden. Durch gleichzeitiges Aus- oder einfahren der Hydraulikzylinder und entsprechende Bewegung der beiden Unterlenker in Querrichtung kann deren Abstand verringert oder vergrößert werden, um diesen an die Breite der Aufnahme des jeweiligen Anbaugerätes anzupassen.

EP 1 175 817 A1 beschreibt eine hydraulische Steuerung der Unterlenker eines Dreipunktkrafthebers, die dazu dient, die Unterlenker auf definierte Standardbreiten einzustellen und ein angebautes Gerät auf einfache Weise bzgl. der Längsachse des Schleppers mittig zu zentrieren. Die Verfahrrichtung der entsprechenden Hydraulikzylinder wird über elektrisch geschaltete Magnetventile eingestellt. Insgesamt werden bei der gezeigten Verstellvorrichtung fünf elektrische Steuersignale benötigt, um die Hydraulikzylinder entweder gemeinsam oder entgegengesetzt ein- bzw. auszufahren.

DE 197 37 318 A1 beschreibt eine Vorrichtung zur hydraulischen Steuerung der Unterlenker eines Dreipunktkrafthebers, bei der die Unterlenker auf Knopfdruck hydraulisch sowohl verriegelt als auch entriegelt werden können. Dadurch kann komfortabel zwischen sicherem Gerätetransport durch den Straßenverkehr und dem Zugeinsatz, bei der das Gerät üblicherweise beweglich sein soll, hin und her geschaltet werden.

WO 2021/004888 A1 beschreibt eine Vorrichtung, welche die Position eines an einen Traktor angekoppelten Zuggeräts quer zur Zugrichtung verstellen kann, sodass das Gerät präzise dem gewünschten Pfad folgt. Die Verstellung erfolgt während des Betriebs als Reaktion auf GPS- oder sonstige Sensordaten.

AT 272 721 B beschreibt eine Vorrichtung, die es ermöglicht, die Unterlenker einer Dreipunktkopplung vom Traktorsitz aus hydraulisch zu bewegen und wahlweise zu stabilisieren.

EP 3 479 668 A1 beschreibt eine Vorrichtung, die an Geräten angebracht werden kann, welche für die Kopplung an eine Dreipunktkopplung vorgesehen sind.

Es ist eine Aufgabe der vorliegenden Erfindung, eine hydraulische Stellvorrichtung sowie eine zugehörige hydraulische Steuerschaltung anzugeben, welche auf einfache Weise eine wahlweise Ansteuerung zweier Hydraulikzylinder ermöglicht. Insbesondere soll die Verstellvorrichtung beziehungsweise deren hydraulische Steuerschaltung mit möglichst wenigen elektrischen Ansteuersignalen auskommen.

Die Aufgabe wird gelöst durch die Merkmale des Anspruchs 1. Vorteilhafte Ausgestaltungen sind den abhängigen Ansprüchen zu entnehmen.

Bei einer Verstellvorrichtung der eingangs genannten Art ist erfindungsgemäß vorgesehen, dass die Steuerschaltung eine Druckregeleinrichtung zur Erzeugung eines einstellbaren Steuerdrucks in Abhängigkeit eines elektrischen Steuersignals und ein mit der Druckregeleinrichtung verbundenes, druckgesteuertes Umschaltventil aufweist, welches bei Anliegen eines ersten Steuerdruckwertes eine erste Schaltstellung einnimmt, in der ein erster der Hydraulikzylinder mit einer Drucksenke und der zweite Hydraulikzylinder mit einer Druckquelle verbunden ist und bei Anliegen eines zweiten Steuerdruckwertes, der höher als der erste Steuerdruckwert ist, eine zweite Schaltstellung einnimmt, in der der erste Hydraulikzylinder mit der Druckquelle und der zweite Hydraulikzylinder mit der Drucksenke verbunden ist.

Wird einer der Hydraulikzylinder mit Druck beaufschlagt, während der zweite mit der Drucksenke verbunden ist, und somit einfahren kann, werden im Falle einer Dreipunktaufhängung beide Unterlenker in dieselbe Richtung querverstellt, ein Anbaugerät somit durch die Dreipunktaufhängung querverstellt. Die erfindungsgemäße Sperrschaltung ermöglicht somit, mit einem einzigen elektrischen Steuersignal eine Querverstellung wahlweise in die eine oder die andere Richtung auszuführen, je nachdem in welche Schaltstellung das druckgesteuerte Umschaltventil durch Einstellung des Schaltdrucks geschaltet wird. Somit ermöglicht die vorliegende Erfindung es auf einfache Weise bei einer landwirtschaftlichen Arbeitsmaschine eine Querverstellung eines Anbaugerätes durchzuführen.

Bei einer vorteilhaften Weiterbildung kann zusätzlich vorgesehen sein, dass das druckgesteuerte Umschaltventil bei Anliegen eines dritten, von dem ersten und zweiten unterschiedlichen Steuerdruckwertes eine dritte Schaltstellung einnimmt, in der beide Hydraulikzylinder mit der Druckquelle oder mit der Drucksenke verbunden sind. In dieser dritten Schaltstellung können somit beide Hydraulikzylinder gleichzeitig ausgefahren oder eingefahren werden. Dies ermöglicht bei einer Dreipunktaufhängung eine Breitenverstellung der Unterlenker. Somit ermöglicht die Erfindung, bei einer Dreipunktaufhängung einer landwirtschaftlichen Arbeitsmaschine mit einem einzigen Steuersignal sowohl eine Querverstellung, als auch eine Breitenanpassung der Unterlenker vorzunehmen. Vorzugsweise ist der dritte Steuerdruckwert so gewählt, dass er niedriger als der erste oder als der zweite Steuerdruckwert liegt. Da eine Breiteneinstellung der Unterlenker einer Dreipunktaufhängung in der Regel ohne Last erfolgt, kann diese somit bei dem niedrigsten Steuerdruckwert ausgeführt werden. In diesem Fall kann der Steuerdruck gleichzeitig genutzt werden, um nicht nur das Umschaltventil zu schalten, sondern ebenso die Hydraulikzylinder auszufahren, d.h. die Hydraulikzylinder werden lediglich mit dem Steuerdruck und nicht mit dem vollen Arbeitsdruck der Druckquelle beaufschlagt.

Ein weiterer Vorteil ergibt sich, wenn die Steuerschaltung zusätzlich ein elektrisch geschaltetes Umschaltventil aufweist, welches entweder direkt oder über druckgesteuerte Ventile in einer ersten Schaltstellung eine über das druckgesteuerte Umschaltventil geschaltete Verbindung zur Druckquelle oder der Drucksenke unterbricht und in einer zweiten Schaltstellung durchschaltet.

Einerseits kann hierbei eine Sicherheitsfunktion wie etwa ein Not-Aus realisiert werden, indem durch Unterbrechen einer Verbindung zur Druckquelle und Drucksenke eine Verstellung der Hydraulikzylinder verhindert und somit deren Position sicher gehalten wird. Darüber hinaus ermöglicht eine Unterbrechung der geschalteten Verbindung in der dritten Schaltstellung eine Umschaltung der Richtung der Breitenverstellung, also entweder ein gleichzeitiges Einfahren oder gleichzeitiges Ausfahren der Hydraulikzylinder zur Breitenanpassung. Das Ausfahren kann hierbei wie bereits erwähnt mit Hilfe des Steuerdruckes erfolgen, welcher aufgrund der Druckregeleinrichtung unterhalb des von der Druckquelle gelieferten Arbeitsdruckes liegt.

Um die Hydraulikzylinder mit Hilfe des Steuerdruckes verstellen zu können, ist zweckmäßigerweise der Steuerdruck von der Druckregeleinrichtung über Rückschlagventile zumindest in der dritten Schaltstellung direkt zu beiden Hydraulikzylindern verbunden. Die Rückschlagventile dienen insbesondere dazu zu verhindern, dass der Arbeitsdruck zurück an den Ausgang der Druckregeleinrichtung gelangen kann, wenn im Betrieb des Anbaugeräts an einen der Hydraulikzylinder der volle Druck der Druckquelle anliegt.

Bei einer Weiterbildung der Erfindung kann es zudem vorgesehen sein, dass der Steuerdruck von der Druckregeleinrichtung über Rückschlagventile und ein weiteres, elektrisch schaltbares Umschaltventil zumindest in der dritten Schaltstellung direkt zu wahlweise einem der beiden Hydraulikzylinder verbunden ist. Somit lassen sich in der dritten Schaltstellung, also zur Breitenanpassung der Unterlenker, letztere separat voneinander seitlich verstellen. Dies kann hilfreich sein, um die Position der Unterlenker zum Ankoppeln eines Anbaugerätes an die Position deren Anlenkpunkte zu verstellen. Somit wird ein aufwändiges, punktgenaues Rangieren mit der Arbeitsmaschine vermieden.

Zweckmäßigerweise kann die Druckregeleinrichtung durch ein Druckregelventil oder durch ein einstellbares Druckbegrenzungsventil mit einem Strömungswiderstand gebildet werden.

Des Weiteren kann zweckmäßigerweise vorgesehen sein, dass von zu den Hydraulikzylindern führenden Druckleitungen Lastmeldeleitungen abzweigen, die mit einem Laststrommeldesystem der Druckquelle verbunden sind, und dass die Druckquelle als volumenstromregelbare Hydraulikpumpe ausgeführt ist. Viele landwirtschaftliche Arbeitsmaschinen verfügen heute über ein entsprechendes Lastdruckmelde- beziehungsweise Loadsensing-System (LS-System). Auf diese Weise kann der Druck- oder Volumenstrom der Hydraulikpumpe an die vom Verbraucher geforderten Bedingungen angepasst werden. Die Pumpe muss somit nur den Volumenstrom fördern, der für alle aktiven Verbraucher momentan benötigt wird. Somit werden Leistungsverluste vermieden, die entstünden, wenn die Hydraulikpumpe auch bei gedrosseltem Volumenstrom immer mit maximaler Leistung fördert.

Wird das druckgesteuerte Umschaltventil als Proportionalventil ausgebildet, derart, dass eine Umschaltbewegung von der ersten Schaltstellung in die zweite Schaltstellung proportional zum Steuerdruck erfolgt, so kann über den Steuerdruck eine Verstellgeschwindigkeit des jeweiligen Unterlenkers verändert werden.

Die von der vorliegenden Erfindung angegebene hydraulische Stellvorrichtung kann für alle Arten von Anwendungen eingesetzt werden, bei der zwei Hydraulikzylinder wahlweise gleichsinnig oder gegensinnig in unterschiedliche Richtungen ausgelenkt werden sollen. Eine bevorzugte Anwendung betrifft jedoch einen sogenannten Dreipunktkraftheber einer landwirtschaftlichen Arbeitsmaschine. Dieser besitzt zwei seitlich schwenkbare Unterlenker, die jeweils über einen Hydraulikzylinder querverstellbar sind, sowie eine hydraulische Steuerschaltung zur Ansteuerung der Hydraulikzylinder. Erfindungsgemäß ist hierbei vorgesehen, dass die Steuerschaltung eine Druckregeleinrichtung zur Erzeugung eines einstellbaren Steuerdrucks in Abhängigkeit eines elektrischen Steuersignals und ein mit der Druckregeleinrichtung verbundenes, druckgesteuertes Umschaltventil aufweist, welches bei Anliegen eines ersten Steuerdruckwertes eine erste Schaltstelle einnimmt, in der ein erster der Hydraulikzylinder mit einer Druckquelle und der zweite Hydraulikzylinder mit einer Drucksenke verbunden ist, und bei Anliegen eines zweiten Steuerdruckwertes, der höher als der erste Steuerdruckwert ist, eine zweite Schaltstellung einnimmt, in der der erste Hydraulikzylinder mit der Drucksenke und der zweite Hydraulikzylinder mit der Druckquelle verbunden ist.

Vorzugsweise kann der Dreipunktkraftheber mit einer hydraulischen Verstellvorrichtung nach einem der Ansprüche 2 bis 7 ausgestattet sein. Die Hydraulikzylinder des Dreipunktkrafthebers sind zweckmäßigerweise als einfach wirkende Zylinder/Kolben-Aggregate mit Federrückstellung ausgebildet. Statt mit einer Rückstellfeder kann die Rückstellung beispielsweise auch durch Gasdruck erfolgen.

Weitere Vorteile und Eigenschaften der vorliegenden Erfindung ergeben sich aufgrund der nachfolgenden Beschreibung von Ausführungsbeispielen anhand der Figuren. Es zeigt:
- Figur 1: den Hydraulikplan einer hydraulischen Verstellvorrichtung in einem ersten Ausführungsbeispiel,
- Figur 2: den Hydraulikplan einer hydraulischen Verstellvorrichtung in einem zweiten Ausführungsbeispiel,
- Figur 3: den Hydraulikplan einer hydraulischen Verstellvorrichtung in einem dritten Ausführungsbeispiel,
- Figur 4: ein hydraulisch gesteuertes Schaltventil mit zusätzlicher Drucksicherungsfunktion, welches in den Ausführungsbeispielen 1 bis 3 eingesetzt werden kann,
- Figuren 5A und 5B: alternative Ausführungsformen einer Druckregeleinrichtung durch ein Druckregelventil (Fig. 5A) oder durch ein einstellbares Druckbegrenzungsventil (Fig. 5B), und
- Figur 6: eine schematische Zeichnung der Unterlenker eines Dreipunktkrafthebers mit seitlich angeordneten Hydraulikzylindern zur Querverstellung der Unterlenker.

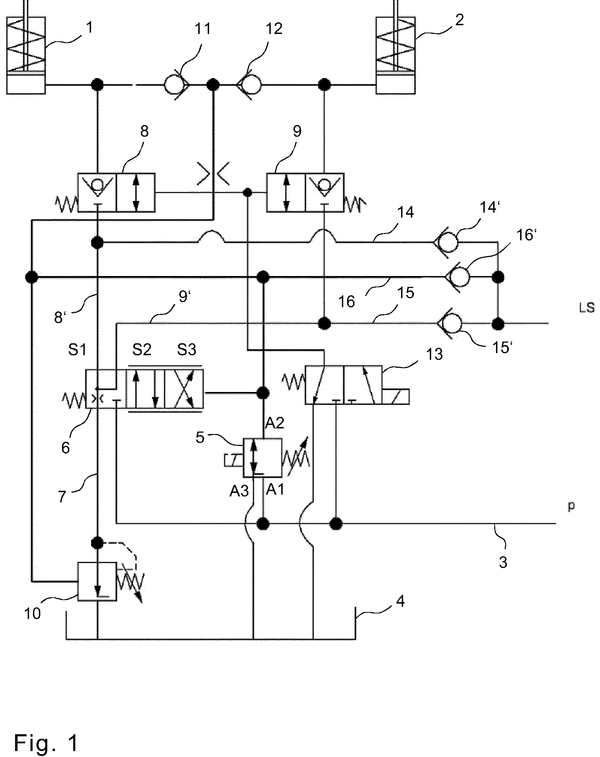

Die in Figur 1 gezeigte Hydraulikschaltung umfasst zwei einseitig wirkende Hydraulikzylinder 1, 2 mit Federrückstellung, die wahlweise angesteuert werden können. Die Schaltung umfasst eine Druckzuleitung 3, an die eine Druckquelle wie etwa die Hydraulikpumpe einer landwirtschaftlichen Arbeitsmaschine angeschlossen ist. Ein Tank 4 bildet die Drucksenke der Hydraulikschaltung.

Herzstück der Schaltung ist ein Druckregelventil 5, welches als Druckregeleinrichtung zur Erzeugung eines einstellbaren Steuerdrucks in Abhängigkeit eines elektrischen Eingangssignals dient. Das Druckregelventil hat einen ersten, mit der Druckzuleitung 3 verbundenen Anschluss A1, einen zweiten Anschluss A2, an dem der einstellbare Steuerdruck anliegt, und einen über einen Tankrücklauf mit dem Tank 4 verbundenen dritten Anschluss A3. Der Anschluss A2 ist mit dem Steueranschluss eines druckgesteuerten Umschaltventils 6 verbunden, welches die Funktion eines 4/3-Wegeventil realisiert. Die vier Anschlüsse des Umschaltventils 6 sind mit der Druckleitung 3, mit einer Tankrückleitung 7 und jeweils über ein druckgesteuerten Schließventil 8, 9 mit einem der beiden Hydraulikzylindern 1, 2 verbunden. In der Tankrückleitung 7 zwischen Umschaltventil 6 und dem Tank 4 befindet sich eine Druckwaage (Differenzdruckventil) 10, deren Steuereingang mit dem Anschluss A2 des Druckregelventils 5 verbunden ist. Außerdem ist der Anschluss A2 des Druckregelventils 5 über je ein Rückschlagventil 11, 12 direkt mit den beiden Hydraulikzylindern 1, 2 verbunden.

Zusätzlich umfasst die Schaltung noch ein elektrisch geschaltetes Umschaltventil 13 in Form eines 3/2-Wegeventils, über welches die Steueranschlüsse der beiden druckgesteuerten Schließventile 8, 9 entweder mit der Druckleitung 3 oder dem Tank 4 verbunden werden können, um die Schließventile 8, 9 entweder zu öffnen oder bei Druckentlastung der Steuerleitung zum Tank 4, federrückgestellt zu schließen.

Lastmeldeleitungen 14, 15, 16 zweigen jeweils vor den beiden druckgesteuerten Schließventilen 8, 9 von den vom druckgesteuerten Umschaltventil 6 zu den Hydraulikzylindern 1, 2 führenden Druckleitungen 8', 9'und von der mit dem Anschluss A2 des Druckregelventils 5 verbundenen Steuerdruckleitung ab und werden mit dem LS-System der Druckquelle verbunden, um den geförderten Volumenstrom an die Lastanforderung anzupassen. Um eine Rückwirkung der Drücke zwischen den Lastmeldeleitungen bzw. mit anderen ggf. angeschlossenen Lastmeldeleitungen zu vermeiden, ist jede der Lastmeldeleitungen 14, 15, 16 mit einem Rückschlagventil 14', 15', 16' versehen.

Die gezeigte Hydraulikschaltung benötigt somit lediglich zwei elektrische Steuersignale, nämlich für das Druckregelventil 5 und das Umschaltventil 13, um die Hydraulikzylinder 1, 2 wahlweise anzusteuern. Je nach von dem Druckregelventil 5 eingestellten Steuerdruckwert p nimmt das druckgesteuerte Umschaltventils 6 einen der drei gezeigten Schaltzustände ein. Bis zu einem unteren Steuerdruckwert p1 verbleibt das Umschaltventil 6 in der durch eine Rückstellfeder gehaltenen linken Schaltstellung (S1), in der die beiden zu den druckgesteuerten Schließventilen 8, 9 führenden Druckleitungen 8', 9' über die Druckwaage 10 zum Tank 4 verbunden sind. Die Druckwaage öffnet erst bei einem Schaltdruck p0, der unterhalb des Steuerdruckwertes p1 liegt. Solange also der Steuerdruck p < p0 ist die Tankrückleitung 7 geschlossen und unabhängig von der Schaltstellung der Schließventilen 8, 9 kann keine Hydraulikflüssigkeit von den Hydraulikzylindern 1, 2 zum Tank fließen.

Bei einem Steuerdruckwert p0 < p < p1 öffnet die Druckwaage 10, sodass die Hydraulikzylinder 1, 2 bei geöffneten Schließventilen 8, 9, also bei bestromtem Umschaltventil 13, zum Tank 4 hin verbunden sind. In diesem Schaltzustand können die Kolbenstangen beider Hydraulikzylinder 1, 2 durch die Kraft deren jeweiliger Rückstellfeder einfahren. Ist das Umschaltventil 13 hingegen unbestromt und die Schließventile 8, 9 damit geschlossen, so bewirkt der über die Rückschlagventile 11, 12 an den Hydraulikzylindern 1, 2 anliegende Steuerdruck p ein Ausfahren der Kolbenstangen beider Hydraulikzylinder 1, 2.

Wird der Steuerdruck erhöht auf einen Wert über dem Steuerdruckwert p1, so schaltet das Umschaltventils 6 zunächst in den mittleren Schaltzustand (S2), in dem die zum Hydraulikzylinder 1 führende Druckleitung 8' zum Tank 4 und die zum Hydraulikzylinder 2 führende Druckleitung 9' mit der Druckzuleitung 3 verbunden ist. Ab einem Steuerdruck über einem oberen Steuerdruckwert p2 schaltet das Umschaltventils 6 in den rechten Schaltzustand (S3), in dem die zum Hydraulikzylinder 1 führende Druckleitung 8' mit der Druckzuleitung 3 und die zum Hydraulikzylinder 2 führende Druckleitung 9' zum Tank 4 verbunden ist. Bei einem Steuerdruckwert p1 < p < p2 und bestromtem Umschaltventil 13 wird somit die Kolbenstange des Hydraulikzylinders 1 ausfahren und die Kolbenstange des Hydraulikzylinders 2 einfahren. Bei einem Steuerdruckwert p > p2 und bestromtem Umschaltventil 13 kehrt sich die Bewegungsrichtung um, d.h. die Kolbenstange des Hydraulikzylinders 1 kann einfahren und die Kolbenstange des Hydraulikzylinders 2 ausfahren. Bei unbestromtem Umschaltventil 13 hingegen sind die Schließventile 8, 9 geschlossen und die von dem Umschaltventil 6 zu den Hydraulikzylindern 1, 2 führenden Druckleitungen 8', 9' gesperrt, sodass die Kolbenposition der Hydraulikzylinder 1, 2 blockiert ist. Auf diese Weise kann durch das Umschaltventil 13 eine Not-Aus Funktion realisiert werden.

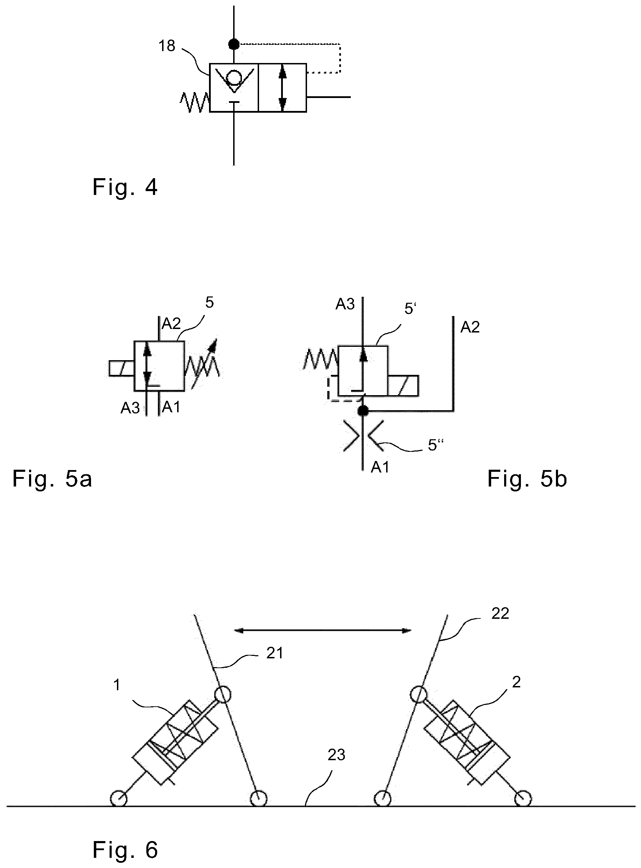

Die Hydraulikzylinder 1, 2, können insbesondere als hydraulische Verstellvorrichtung zur Querverstellung der Unterlenker 21, 22 eines Dreipunktkrafthebers an einer landwirtschaftlichen Arbeitsmaschine eingesetzt werden, wie dies in Figur 6 schematisch gezeigt ist. Dargestellt sind hier stark vereinfacht die beiden Unterlenker 21, 22 eines Dreipunktkrafthebers, die schwenkbar an entsprechenden Lagerungspunkten, z.B. einem Anhängebock der landwirtschaftlichen Arbeitsmaschine befestigt sind. Die beiden Hydraulikzylinder 1, 2, sind jeweils in seitlicher Richtung schräg verlaufend mit einem den beiden Unterlenker 21, 22 verbunden. Durch gleichsinnige Bewegung, d.h. beiderseitiges Ausfahren oder Einfahren der Kolbenstange der Hydraulikzylinder 1, 2 kann die Breite zwischen den beiden Unterlenkern 21, 22 verringert bzw. vergrößert werden. Dies erfolgt in der linken Schaltstellung (S1) des Umschaltventils 6, d. h. bei einem Steuerdruckwert p0 < p < p1, wobei durch Bestromung des Umschaltventils 13 die Breite vergrößert (Einfahrbewegung der Kolbenstangen) und im unbestromten Zustand des Umschaltventils 13 die Breite verringert wird (Ausfahrbewegung der Kolbenstangen). Bei einem Steuerdruckwert p1 < p < p2 und bestromtem Umschaltventil 13 kann ein an den Dreipunktkraftheber angekoppeltes Arbeitsgerät nach rechts (Schaltstellung S2) und bei einem Steuerdruckwert p > p2 nach links (Schaltstellung S3) verstellt werden. In einem Ausführungsbeispiel wird die Schaltstellung S1 bei einem Druck von 0 bis 5 bar eingenommen; die Schaltstellung S2 wird bei einem Druck zwischen 10 und 15 bar eingenommen und die Schaltstellung S3 bei einem Druck zwischen 15 und 20 bar. Natürlich sind auch höhere oder niedrigere Druckwerte für die einzelnen Schaltstellungen denkbar. Generell ist das erforderliche Druckniveau von Reibwerten der mechanischen Bauteile, insbesondere der Reibung im Hydraulikzylinder, abhängig. Bevorzugt sind die Drücke wie im genannten Ausführungsbeispiel so gewählt, dass eine Verstellung mit dem Betriebsdruck einer leistungsgesteuerten Hydraulikpumpe eines Traktors (LS-System) im Leerlaufbetrieb betrieben werden kann. Die Schaltstellung von S2 nach S3 können hier insbesondere übergangslos angesteuert werden, also von 10 bis 15 und dann von 15 bis 20 bar.

Die Hydraulikschaltung ermöglicht also sowohl eine Breitenverstellung des Dreipunktkrafthebers als auch eine Querbewegung des angekoppelten Arbeitsgerätes über die Querverstellung der Unterlenker. Eine solche Querbewegung des gesamten Anbaugeräts oder von Teilen des Anbaugeräts z.B. während der Arbeit auf dem Feld kann mit dem Ziel erfolgen, die Frucht im Acker vor Beschädigungen durch das Anbaugerät zu schützen, etwas bei Hackarbeiten oder ähnlichem zwischen den Fruchtreihen.

Darüber hinaus ermöglicht die erfindungsgemäße Steuerschaltung es, die Unterlenker bei aufgenommen Anbaugerät gegeneinander zu verspannen, also gegen Querbewegungen zu versteifen. Hierdurch wird ein sicherer Fahrbetrieb der Arbeitsmaschine auf öffentlichen Straßen wie auch auf dem Feld ermöglicht. Das Verspannen erfolgt in der linken Schaltstellung (S1) des Umschaltventils 6, d. h. bei einem Steuerdruckwert p0 < p < p1, indem beide Hydraulikzylinder 1, 2 gegeneinander ausfahren.

Durch das Vorspannen des Rücklaufs zum Tank 4 über die Leitung 7 mittels der Druckwaage 10 wird die Gefahr verringert, dass ein Unterdruck im Hydraulikzylinder 1, 2 auftreten kann, wenn durch Querbeschleunigungen die Last dem hydraulischen Druck voreilt. Die Vorspannung erfüllt hierbei sozusagen die Funktion einer Senkbremse mit einem geringen Öffnungsdruck. Wenn höhere Vorspanndrücke benötigt werden, könnte alternativ die Druckwaage 10 durch zwei parallelgeschaltete Senkbremsen ersetz werden. Zum Öffnen der Senkbremsen könnte in diesem Fall der jeweilige Druck aus der Leitung 15 bzw. 14 abgegriffen werden um damit die jeweilige Senkbremse zu öffnen.

Da der Öffnungsdruck p0, bei dem die Druckwaage 10 öffnet, unter dem unteren Schaltdruck p1 des Umschaltventils 6 liegt, werden die beiden Ventile nacheinander geschaltet. Diese sequentielle Ansteuerung stellt sicher, dass es nicht zu funktionalen Überscheidungen kommen kann.

Das druckgesteuerte Umschaltventil 6 kann zusätzlich eine Proportionalfunktion beinhalten, d.h. dass die von dem Ventil geschalteten Verbindungen druckabhängig weiter oder weniger freigegeben werden, und so eine druckabhängige Drosselfunktion bewirkt wird. Hierdurch wird erreicht, dass die Zylinder 1 und 2 proportional mit dem Pumpendruck (bevorzugt eines LS-Systems) dynamisch im Feld bewegt werden können. Hierbei steht dann die maximale Pumpenleistung des Hydrauliksystems zur Verfügung, auch wenn für die erfindungsgemäße Verstellvorrichtung typischerweise nur wenig Pumpenleistung benötigt wird.

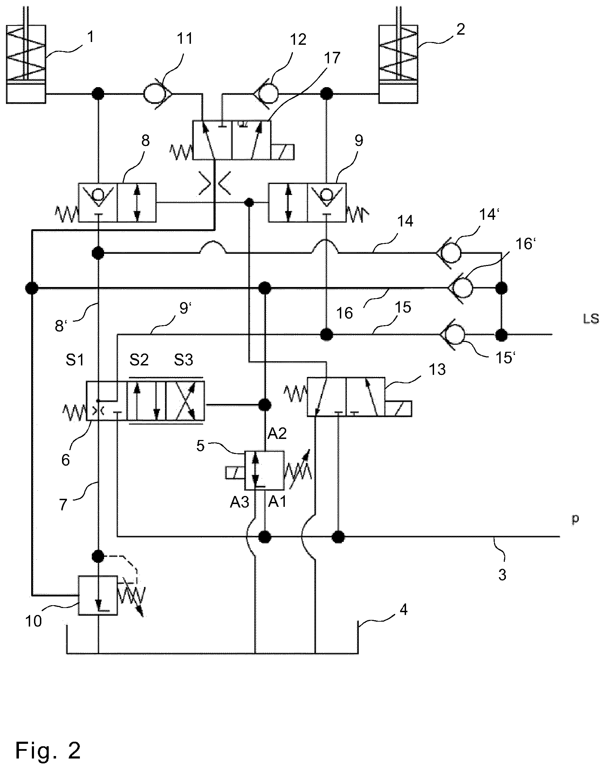

Eine Weiterbildung der Hydraulikschaltung aus Figur 1 ist in Figur 2 gezeigt. Dort ist zusätzlich in der von Anschluss A2 des Druckregelventils 5 kommenden Steuerdruckleitung ein elektrischen 3/2-Wege-Umschaltventil eingebaut, mit dem der Steuerdruck p in der linken Schaltstellung (S1) des Umschaltventils 6 (p0 < p < p1) statt auf beide Hydraulikzylinder 1, 2, gleichzeitig, auf lediglich wahlweise einen der beiden Hydraulikzylinder 1, 2 gegeben werden kann. Dies ermöglicht eine unabhängige Positionierung der Unterlenker beim Ankoppeln eines Anbaugeräts.

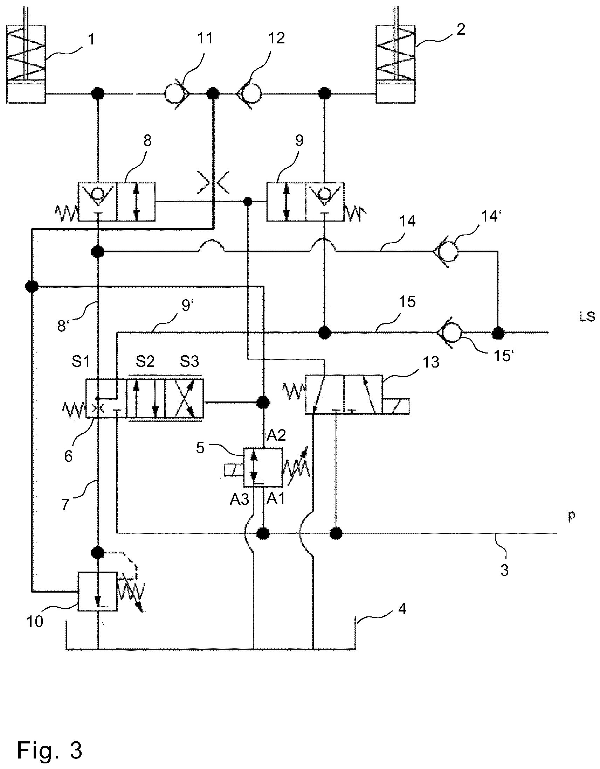

In Figur 3 ist eine weitere Abwandlung der Hydraulikschaltung aus Figur 1 gezeigt. Hierbei wird auf die in Figur 1 vorhandene Lastmeldeleitung 16, die von der mit dem Anschluss A2 des Druckregelventils 5 verbundenen Steuerdruckleitung abzweigt, verzichtet. Auf diese Weise wird eine Breitenverstellung oder Verspannung der Unterlenker 21, 22 möglich, ohne dass eine Druckmeldung an das LS-System der Arbeitsmaschine erfolgt.

In Figur 4 ist ein druckgesteuertes Schließventil 18 mit zusätzlicher Steuerleitung zur Druckabsicherung gezeigt, welches anstelle der druckgesteuerten Schließventile 8, 9 eingebaut werden kann. Hierdurch kann der Druck in den Hydraulikzylindern 1, 2 auf einen zulässigen Maximaldruck begrenzt werden. Wird dieser überschritten, beispielsweise durch Einwirken externer Kräfte auf ein angekoppeltes Anbaugerät, so öffnen die Ventile 8, 9 und überschießender Druck kann über die Tankrückleitung 7 abgebaut werden.

Die Figuren 5a und 5b zeigen einen Vergleich eines Druckregelventils 5 wie in den Figuren 1 bis 3 eingesetzt, mit einem alternativ als Druckregeleinrichtung einsetzbaren Druckbegrenzungsventil 5' mit zusätzlichem Strömungswiderstand 5" (Drossel). Die Anschlüsse A1, A2, und A3 sind entsprechend ihrer funktionsrichtigen Beschaltung in den Hydraulikschaltungen der Figuren 1 bis 3 bezeichnet.

## Patentansprüche

1. Hydraulische Verstellvorrichtung zur Querverstellung für Unterlenker (21, 22) eines Dreipunktkrafthebers an einer landwirtschaftlichen Arbeitsmaschine, mit zwei wahlweise ansteuerbaren Hydraulikzylindern (1, 2) und einer hydraulischen Steuerschaltung zur Ansteuerung der Hydraulikzylinder (1, 2),
**dadurch gekennzeichnet, dass**
die Steuerschaltung ein Druckregeleinrichtung (5) zur Erzeugung eines einstellbaren Steuerdrucks in Abhängigkeit eines elektrischen Steuersignals und ein mit der Druckregeleinrichtung (5) verbundenes, druckgesteuertes Umschaltventil (6) aufweist, welches bei Anliegen eines ersten Steuerdruckwertes eine erste Schaltstellung (S2) einnimmt, in der ein erster der Hydraulikzylinder (1) mit einer Drucksenke (4) und der zweite Hydraulikzylinder (2) mit einer Druckquelle (3) verbunden ist, und bei Anliegen eines zweiten Steuerdruckwertes, der höher als der erste Steuerdruckwert ist, eine zweite Schaltstellung (S3) einnimmt, in der der erste Hydraulikzylinder (1) mit der Druckquelle (3) und der zweite Hydraulikzylinder mit der Drucksenke (4) verbunden ist.

2. Hydraulische Verstellvorrichtung nach Anspruch 1, bei der das druckgesteuerte Umschaltventil (6) bei Anliegen eines dritten, von dem ersten und zweiten unterschiedlichen Steuerdruckwertes, eine dritte Schaltstellung (S1) einnimmt, in der beide Hydraulikzylinder (1, 2) mit der Druckquelle (3) oder mit der Drucksenke (4) verbunden sind.

3. Hydraulische Verstellvorrichtung nach Anspruch 2, bei der die Steuerschaltung zusätzlich ein elektrisch geschaltetes Umschaltventil (13) aufweist, welches entweder direkt oder über druckgesteuerte Ventile (8, 9) in einer ersten Schaltstellung eine über das druckgesteuerte Umschaltventil (6) geschaltete Verbindung zur Druckquelle (3) oder der Drucksenke (4) unterbricht und in einer zweiten Schaltstellung durchschaltet.

4. Hydraulische Verstellvorrichtung nach Anspruch 2 oder 3, bei der der Steuerdruck von der Druckregeleinrichtung (5) über Rückschlagventile (11, 12) zumindest in der dritten Schaltstellung (S1) direkt zu beiden Hydraulikzylindern (1, 2) verbunden ist.

5. Hydraulische Verstellvorrichtung nach Anspruch 2 oder 3, bei der der Steuerdruck von der Druckregeleinrichtung (5) über mindestens ein Rückschlagventil (11, 12) und ein weiteres elektrisch schaltbares Umschaltventil (17) zumindest in der dritten Schaltstellung (S1) direkt zu wahlweise einem der beiden Hydraulikzylinder (1, 2) verbunden ist.

6. Hydraulische Verstellvorrichtung nach einem der vorangehenden Ansprüche, bei der die Druckregeleinrichtung (5) durch ein Druckregelventil (5) oder durch ein einstellbares Druckbegrenzungsventil (5') mit einem Strömungswiderstand (5") gebildet ist.

7. Hydraulische Verstellvorrichtung nach einem der vorangehenden Ansprüche, bei der von zu den Hydraulikzylindern (1, 2) führenden Druckleitungen (8', 9') Lastmeldeleitungen (14, 15) abzweigen, die mit einem Lastdruck-Melde-System (LS) der Druckquelle (3) verbunden sind und die Druckquelle (3) als volumenstromregelbare Hydraulikpumpe ausgeführt ist.

8. Hydraulische Verstellvorrichtung nach einem der vorangehenden Ansprüche, bei der das druckgesteuerte Umschaltventil (6) derart ausgebildet ist, dass eine Umschaltbewegung von der ersten Schaltstellung (S2) in die zweite Schaltstellung (S3) proportional zum Steuerdruck erfolgt.

9. Dreipunktkraftheber einer landwirtschaftlichen Arbeitsmaschine, mit zwei seitlich schwenkbaren Unterlenkern (21, 22), die jeweils über einen Hydraulikzylinder (1, 2) hydraulisch querverstellbar sind, und mit einer hydraulischen Steuerschaltung zur Ansteuerung der Hydraulikzylinder (1, 2)
**dadurch gekennzeichnet, dass**
die Steuerschaltung ein Druckregeleinrichtung (5) zur Erzeugung eines einstellbaren Steuerdrucks in Abhängigkeit eines elektrischen Steuersignals und ein mit der Druckregeleinrichtung (5) verbundenes, druckgesteuertes Umschaltventil (6) aufweist, welches bei Anliegen eines ersten Steuerdruckwertes eine erste Schaltstellung (S2) einnimmt, in der ein erster der Hydraulikzylinder (1) mit einer Drucksenke (4) und der zweite Hydraulikzylinder (2) mit einer Druckquelle (3) verbunden ist, und bei Anliegen eines zweiten Steuerdruckwertes, der höher als der erste Steuerdruckwert ist, eine zweite Schaltstellung (S3) einnimmt, in der der erste Hydraulikzylinder (1) mit der Druckquelle (3) und der zweite Hydraulikzylinder (2) mit der Drucksenke (4) verbunden ist.

10. Dreipunktkraftheber nach Anspruch 9 mit einer hydraulischen Verstellvorrichtung für die Unterlenker (21, 22) nach einem der Ansprüche 2 bis 8.

11. Dreipunktkraftheber nach Anspruch 9 oder 10, bei dem die Hydraulikzylinder (1, 2) als einfach wirkende Zylinder-Kolbenaggregate mit Feder- oder Gasdruckrückstellung ausgebildet sind.

## Claims

1. Hydraulic adjustment device for transverse adjustment of lower links (21, 22) of a three-point power lift on an agricultural machine, with two selectively actuatable hydraulic cylinders (1, 2) and a hydraulic control circuit for actuating the hydraulic cylinders (1, 2),
**characterized in that**
the control circuit has a pressure control apparatus (5) for generating an adjustable control pressure depending on an electrical control signal, and a pressure-controlled changeover valve (6) which is connected to the pressure control apparatus (5) and which, when a first control pressure value is applied, assumes a first switching position (S2) in which a first of the hydraulic cylinders (1) is connected to a pressure sink (4) and the second of the hydraulic cylinders (2) is connected to a pressure source (3), and, when a second control pressure value is applied which is higher than the first control pressure value, assumes a second switching position (S3) in which the first hydraulic cylinder (1) is connected to the pressure source (3) and the second hydraulic cylinder is connected to the pressure sink (4).

2. Hydraulic adjustment device according to claim 1, wherein the pressure-controlled changeover valve (6), when a third control pressure value is applied that differs from the first and the second values, assumes a third switching position (S1) in which both of the hydraulic cylinders (1, 2) are connected to the pressure source (3) or to the pressure sink (4).

3. Hydraulic adjustment device according to claim 2, wherein the control circuit additionally has an electrically switched changeover valve (13) which, either directly or via pressure-controlled valves (8, 9), in a first switching position interrupts a connection to the pressure source (3) or the pressure sink (4), which connection is switched via the pressure-controlled changeover valve (6), and in a second switching position connects through.

4. Hydraulic adjustment device according to claim 2 or 3, wherein the control pressure from the pressure control apparatus (5) is connected directly to both hydraulic cylinders (1, 2) via check valves (11, 12) at least in the third switching position (51).

5. Hydraulic adjustment device according to claim 2 or 3, wherein the control pressure from the pressure control apparatus (5) is connected directly to one of the two hydraulic cylinders (1, 2) selectively via at least one check valve (11, 12) and a further electrically switchable changeover valve (17) at least in the third switching position (S1).

6. Hydraulic adjustment device according to any one of the preceding claims, wherein the pressure control apparatus (5) is formed by a pressure control valve (5) or by an adjustable pressure-limiting valve (5') with a flow resistor (5").

7. Hydraulic adjustment device according to any one of the preceding claims, wherein load signal lines (14, 15) branch off from pressure lines (8', 9') leading to the hydraulic cylinders (1, 2) and are connected to a load pressure signal system (LS) of the pressure source (3), and the pressure source (3) is designed as a volume-flow-controllable hydraulic pump.

8. Hydraulic adjustment device according to any one of the preceding claims, wherein the pressure-controlled changeover valve (6) is configured such that a changeover movement from the first switching position (S2) into the second switching position (S3) is proportional to the control pressure.

9. Three-point power lift of an agricultural machine, with two laterally pivotable lower links (21, 22), each of which is hydraulically transversely adjustable via a hydraulic cylinder (1, 2), and with a hydraulic control circuit for actuating the hydraulic cylinders (1, 2),
**characterized in that**
the control circuit has a pressure control apparatus (5) for generating an adjustable control pressure depending on an electrical control signal, and a pressure-controlled changeover valve (6) which is connected to the pressure control apparatus (5) and which, when a first control pressure value is applied, assumes a first switching position (S2) in which a first of the hydraulic cylinders (1) is connected to a pressure sink (4) and the second of the hydraulic cylinders (2) is connected to a pressure source (3), and, when a second control pressure value is applied which is higher than the first control pressure value, assumes a second switching position (S3) in which the first hydraulic cylinder (1) is connected to the pressure source (3) and the second hydraulic cylinder (2) is connected to the pressure sink (4).

10. Three-point power lift according to claim 9, with a hydraulic adjustment device for the lower links (21, 22) according to any one of claims 2 to 8.

11. Three-point power lift according to claim 9 or 10, wherein the hydraulic cylinders (1, 2) are configured as single-acting cylinder-piston units with spring or gas pressure return.

## Revendications

1. Dispositif de réglage hydraulique pour le réglage transversal de bras inférieurs (21, 22) d'un dispositif de levage à trois points sur une machine de travail agricole avec deux vérins hydrauliques (1, 2) pouvant être commandés au choix et un circuit de commande hydraulique pour la commande des vérins hydrauliques (1, 2),
**caractérisé en ce que**
le circuit de commande présente un appareil de régulation de pression (5) pour générer une pression de commande réglable en fonction d'un signal de commande électrique et une vanne de commutation (6) commandée par pression et reliée à l'appareil de régulation de pression (5), laquelle vanne adopte, en présence d'une première valeur de pression de commande, une première position de commutation (S2) dans laquelle un premier des vérins hydrauliques (1) est relié à un puits de pression (4) et le deuxième vérin hydraulique (2) à une source de pression (3) et adopte, en présence d'une deuxième valeur de pression de commande qui est supérieure à la première valeur de pression de commande, une deuxième position de commutation (S3) dans laquelle le premier vérin hydraulique (1) est relié à la source de pression (3) et le deuxième vérin hydraulique au puits de pression (4).

2. Dispositif de réglage hydraulique selon la revendication 1, dans lequel la vanne de commutation (6) commandée par pression adopte, en présence d'une troisième valeur de pression de commande différente de la première et de la deuxième, une troisième position de commutation (S1) dans laquelle les deux vérins hydrauliques (1, 2) sont reliés à la source de pression (3) ou au puits de pression (4).

3. Dispositif de réglage hydraulique selon la revendication 2, dans lequel le circuit de commande présente en outre une vanne de commutation (13) commutée électriquement qui interrompt soit directement, soit par l'intermédiaire de vannes (8, 9) commandées par pression, dans une première position de commutation, une liaison avec la source de pression (3) ou le puits de pression (4) commutée par l'intermédiaire de la vanne de commutation (6) commandée par pression, et la commute dans une deuxième position de commutation.

4. Dispositif de réglage hydraulique selon la revendication 2 ou 3, dans lequel la pression de commande de l'appareil de régulation de pression (5) est reliée directement aux deux vérins hydrauliques (1, 2) par l'intermédiaire de clapets de retenue (11, 12) au moins dans la troisième position de commutation (S1).

5. Dispositif de réglage hydraulique selon la revendication 2 ou 3, dans lequel la pression de commande est reliée directement de l'appareil de régulation de pression (5) à l'un des deux vérins hydrauliques (1, 2) au choix, au moins dans la troisième position de commutation (S1), par l'intermédiaire d'au moins un clapet de retenue (11, 12) et d'une vanne de commutation (17) supplémentaire à commutation électrique.

6. Dispositif de réglage hydraulique selon l'une quelconque des revendications précédentes, dans lequel l'appareil de régulation de pression (5) est formé par une vanne de régulation de pression (5) ou par une vanne de limitation de pression réglable (5') avec une résistance à l'écoulement (5").

7. Dispositif de réglage hydraulique selon l'une quelconque des revendications précédentes, dans lequel des conduites de pression (8', 9') menant aux vérins hydrauliques (1, 2) dérivent des conduites de signalisation de charge (14, 15) qui sont reliées à un système de signalisation de pression de charge (LS) de la source de pression (3), et la source de pression (3) est réalisée en tant que pompe hydraulique à débit volumétrique réglable.

8. Dispositif de réglage hydraulique selon l'une quelconque des revendications précédentes, dans lequel la vanne de commutation (6) commandée par pression est conçue de sorte qu'un mouvement de commutation de la première position de commutation (S2) à la deuxième position de commutation (S3) s'effectue proportionnellement à la pression de commande.

9. Dispositif de levage à trois points d'une machine de travail agricole avec deux bras inférieurs (21, 22) pivotant latéralement qui sont respectivement déplaçables transversalement par voie hydraulique par l'intermédiaire d'un vérin hydraulique (1, 2) et avec un circuit de commande hydraulique pour la commande des vérins hydrauliques (1, 2)
**caractérisé en ce que**
le circuit de commande présente un appareil de régulation de pression (5) pour générer une pression de commande réglable en fonction d'un signal de commande électrique et une vanne de commutation (6) commandée par pression et reliée à l'appareil de régulation de pression (5), laquelle vanne adopte, en présence d'une première valeur de pression de commande, une première position de commutation (S2) dans laquelle un premier des vérins hydrauliques (1) est relié à un puits de pression (4) et le deuxième vérin hydraulique (2) à une source de pression (3) et adopte, en présence d'une deuxième valeur de pression de commande qui est supérieure à la première valeur de pression de commande, une deuxième position de commutation (S3) dans laquelle le premier vérin hydraulique (1) est relié à la source de pression (3) et le deuxième vérin hydraulique (2) au puits de pression (4).

10. Dispositif de levage à trois points selon la revendication 9 avec un dispositif de réglage hydraulique des bras inférieurs (21, 22) selon l'une quelconque des revendications 2 à 8.

11. Dispositif de levage à trois points selon la revendication 9 ou 10, dans lequel les vérins hydrauliques (1, 2) sont conçus en tant qu'ensembles vérin-piston à simple effet avec retour de pression par ressort ou gaz.
